# EUROPEAN PATENT SPECIFICATION

(11) **EP 3 820 312 B1**
(45) Date of publication and mention of the grant of the patent: **07.06.2023**
(21) Application number: 19739350.7
(22) Date of filing: 03.07.2019
(51) Int. Cl.: A24C 5/34, G01N 21/952

(54) **APPARATUS FOR ANALYSING A ROD-SHAPED SMOKING ARTICLE**
VORRICHTUNG ZUR ANALYSE EINES STABFÖRMIGEN RAUCHARTIKELS
APPAREIL POUR ANALYSER UN ARTICLE À FUMER EN FORME DE TIGE

(30) Priority: 09.07.2018 GB 201811223
(43) Date of publication of application: 19.05.2021
(73) Proprietor: MPRD Limited, Milton Keynes, Buckinghamshire MK14 6LY (GB)
(72) Inventor: COX, Matthew James, Milton Keynes Buckinghamshire MK14 6LY (GB)
(74) Representative: CSY London
(86) International application number: PCT/GB2019/051882
(87) International publication number: WO 2020/012162

(56) References cited:
- WO-A2-2015/039851
- DE-A1-102011 006 449
- DE-A1-102014 209 721
- US-A1- 2012 257 713

## Description

The present invention relates to apparatus for analysing a rod-shaped smoking article. The invention has particular but not exclusive application in determining physical properties of smoking articles, such as a cigarettes or a heat-not-burn sticks, having hidden features such as capsules, inserts, complex filter constructions, internal foils or heating elements whose positional and/or structural integrity cannot be determined by visual inspection or without destroying the sample.

The known adverse effects of smoking tobacco include Chronic Obstructive Pulmonary Disease (COPD), heart disease, cancer and stroke. Tobacco companies have attempted to reduce the impact of smoking by introducing new products that heat rather than burn tobacco. These products are often referred to as heat-not-burn (HNB) products. Typically, HNB products comprise an electronic heating device and a disposable stick made of tobacco as well as other components used to cool smoke and filter residual particulates from the vapour stream. These disposable HNB sticks are of much more complex construction than conventional cigarettes and consequently are made at lower speeds and have higher possibilities for being made incorrectly in a commercial environment.

HNB sticks may have varying constructions depending on the manufacturer but typically will have a tobacco element, a filter element, and a transfer tube. Other physical components may be present such as carbon blocks, flavour capsules, foils, metal strips and so on. The stick is wrapped with paper to hold it together in a form not unlike a conventional cigarette, and may further include tipping paper and flavours such as menthol.

During manufacture of HNB sticks it is necessary to perform quality control to establish if the physical construction is as specified. Any internal defects will be hidden by the wrapping. This means that the components of the HNB stick cannot be inspected using conventional callipers and inspection equipment unless the stick is disassembled. However, disassembling the stick is a time-consuming activity, destroys evidence and the act of disassembly may disturb the components and render inspection inconclusive. A more acceptable method would be to inspect the various components in situ.

Camera systems using visible light have been used to detect defects in conventional cigarettes. For example, WO 2004/083834, discloses an imaging system for analysing a cigarette using visible or infrared light. However, such systems may not be effective with HNB sticks where the samples may have thick papers, outer metal foils, little density differences between components, or where the sample is too thick to let light pass.

Alternatively, scanning microwave systems could be deployed. However these require significant differences in density between components or significant differences in moisture content to work effectively. Furthermore, they may not work if metal outer wrappers or metallic feature bands are present. They also generally have low spatial resolution (ca 0.1 mm or above) and can only discriminate in one plane (i.e. a two dimensional "image" is produced). As a consequence, such systems may be able to determine the longitudinal position of a component such as a liquid filled capsule, but not its radial position.

US 2012/0257713 A1 discloses a computer tomography (CT) scanning system which performs non-destructive analysis of an object. The CT scanning system generates a series of two-dimensional images of the object from different angles as the object rotates. The CT scanning system uses the generated two-dimensional images to reconstruct three-dimensional images of the object.

WO 2015/039851 A2 discloses an apparatus for inspecting a rod-shaped article of the tobacco industry, including an optical output configured to output a beam of electromagnetic radiation, a first receiver and a second receiver. The first receiver is for receiving radiation which has been output by the optical output and transmitted through the rod-shaped article. Moreover, the optical output and the first receiver face each other. The second receiver is for receiving radiation which has been output by the optical output and redirected within the rod-shaped article.

DE 102014209721, discloses a method of determining a property of a rod-shaped article in which the article is positioned between an x-ray source and an x-ray detector. The article is rotated about its axis, and x-ray images are recorded in different rotational positions. A 3D model of the article is then constructed from the recorded x-ray images by means of a CT algorithm, and the 3D model is evaluated to determine the property of the article.

A disadvantage of the system of DE 102014209721 is that it requires the sample to be rotated, multiple images to be taken, and a 3D model to be constructed using a CT algorithm. As a consequence, the system may be slow in operation and expensive to manufacture.

It would therefore be desirable to provide a system for determining physical properties of a rod-shaped article which is suitable for analysing products such as HNB sticks, which is capable of high speed processing and/or which is relatively inexpensive to manufacture.

According to a first aspect of the present invention there is provided apparatus for analysing a rod-shaped smoking article as defined in claim 1.

The present invention may provide the advantage that it can allow the analysis of products such as HNB sticks where the samples may have thick papers, outer metal foils, little density differences between components, and/or where the sample is too thick to let light pass without requiring sample rotation or the complexity of forming of a 3D image. The present invention may therefore provide a solution which is inherently simpler and less expensive than previously-known techniques, and/or which is suitable for high speed processing applications.

By "in an axial direction" it is preferably meant that relative movement between the article and the sensor is produced in a direction which is substantially parallel to the longitudinal axis of the rod-shaped article. For example, either the article or the sensor or both may be moved. However, it will be appreciated that some deviation from this is contemplated, and the longitudinal axis of the article may be at a (non-zero) angle to the direction of movement.

The smoking article may be any type of smoking article, such as a conventional cigarette, or a heat-not-burn stick. The rod-shaped smoking article may comprise a plurality of components, and thus the apparatus may be arranged to analyse a rod-shaped smoking article comprising a plurality of components.

The smoking article may comprise at least one hidden feature, which is preferably a feature whose positional and/or structural integrity cannot be determined by visual inspection or without destroying the sample. For example, the smoking article may comprise one or more internal components such as a capsule, insert, complex filter construction, internal foil or heating element.

The x-ray radiation is preferably electromagnetic radiation with a wavelength shorter than ultraviolet and longer than gamma rays. For example, the x-ray radiation may have a wavelength of between 0.01 and 10 nm.

The area image sensor is preferably a sensor which is arranged to image a particular area of the article at any one time, rather than the whole article. Thus, the area image sensor may be selected in size to match an area of interest of the article. For example, in some embodiments, the area image sensor may image a rectangular area of between 5 mm and 30 mm in each direction, although of course other values could be used instead. This can allow the cost of the area image sensor to be reduced, and may allow the use of standard components.

Preferably, the area image sensor is arranged to image an area which is smaller than a length of the rod-shaped smoking article. This can allow a relatively small and low-cost sensor to be used to image different parts of the article when the article is moved axially relative to the sensor.

The area image sensor may comprise, for example, a flat panel x-ray detector, which may be, for example, of the CMOS (complementary metal-oxide-semiconductor) or CCD (charge-coupled device) type. Such devices are readily available and thus can be provided at relatively low cost.

In principle, the information gained from the image data can be enhanced if the article is rotated about its axis whilst a series of images are taken, and a three-dimensional image is built up of the article structure. However, in practice it has been found that this may involve excessive waiting times. It has been found that similar benefits can be obtained by simultaneously taking two images at 90° to one another or at another suitable angle.

Thus, the apparatus comprises two or more area image sensors (such as flat panel detectors) disposed circumferentially about the rod-shaped article (relative to its longitudinal axis). Preferably the two area image sensors are arranged at the same or a similar position longitudinally (axially) with respect to the article, and at an angle to each other circumferentially. Thus, each area image sensor may be arranged to image the same or a similar part of the article longitudinally, but from a different angle circumferentially. For example, the two area image sensors may be orthogonal to each other, when viewed circumferentially about the rod-shaped article. Preferably the two area image sensors are arranged to image an area of the article simultaneously. This can allow physical properties of the article to be observed or determined in three (potentially orthogonal) directions without the need to rotate the sample or to construct a three-dimensional image.

The two or more area image sensors may be irradiated by a single source. Thus, the source of x-ray radiation may be arranged to produce a beam of radiation which is wide enough to be detected by both area image sensors. This may help to keep down the cost of the apparatus, while allowing physical properties of the article to be observed or determined in three directions.

If desired, three or more area image sensors could be used, disposed for example at different positions circumferentially about the article, in order to gather additional information.

The processing unit is arranged to process two-dimensional image data produced by each of the area image sensors and to produce the output in dependence thereon. For example, the processing unit may be arranged to determine positional characteristics of the article or components of the article in three orthogonal directions (such as the x, y and z axes).

The processing unit is arranged to process an image produced without rotation of the rod-shaped smoking article. This may facilitate high speed processing and/or help to avoid complexity and cost.

The processing unit may be arranged to output at least one two-dimensional image to be displayed and/or to output processed dimensional or quality information. For example, the processing unit may be arranged to output individual two-dimensional images from the area image sensor(s), or composite two-dimensional images. The image may be output directly to a display, or for example to communications module for transmission or to a storage device for later display. The display may be part of the apparatus, or an external display.

In one embodiment, the processing unit is arranged to produce a composite two-dimensional image from two-dimensional image data produced by the area image sensor at a plurality of different axial positions of the article. This can allow the whole of the article (or a larger part than that which can be imaged at any one time) to be imaged by "stitching" together images from different areas. However individual images from the area image sensor(s) may also be displayed as well or instead.

The processing unit may be arranged to apply a filter to an image to be displayed. The filter may be applied to a composite image or to an individual image, or both. The filter may be, for example, one or more of a wide tone range filter, a dark tone range filter, a dynamic compression filter, or any other type of filter. This may allow certain components or features of the article to be enhanced in the image.

Preferably the processing unit is arranged to perform an imaging algorithm which analyses variations in intensity and/or colour in the two-dimensional image data. For example, the processing unit may be arranged to perform an edge detection algorithm, a thresholding algorithm, a segmentation algorithm, a distance measuring algorithm and/or any other appropriate imaging algorithm. This may allow the processing unit, for example, to identify components of the article, to measure physical properties of the article or components thereof, and/or to detect defects.

Preferably the processing unit is arranged to identify components of the article in a two-dimensional image. This may be achieved, for example, using an imaging algorithm which analyses variations in intensity of the image to identify individual components. The identified components may be indicated to a user by, for example, marking them on an image, highlighting them, displaying them in a different colour, or in any other way.

Preferably the processing unit is arranged to determine one or more physical properties of the article or a component thereof. This may be achieved using an imaging algorithm which analyses variations in intensity of the image to determine the physical properties.

The physical properties may comprise one or more of: a component dimension; a position of a component within the article; length of the article; diameter of the article; concentricity of the article; length of a tobacco plug; length of a tube; length of a filter; length of a wrapping paper; length of a foil overwrap; outside diameter of a tube; position of foil; inside diameter of a tube; length of an inserted component; concentricity of a tube; wall thickness of a tube; location of an inserted component; diameter of an inserted component; concentricity of an inserted component; size of a gap between components; end cut angle of a component; overwrap of tipping and/or envelope papers; density of tobacco fill; dense end offset of tobacco column; uniformity of reconstituted tobacco crimp; contamination from one component to another; uniformity of carbon distribution in a filter; longitudinal and radial positioning of inserted elements in filters and/or tobacco columns; or any other physical property which can be determined from the image data. In the case of a tube, the tube may be a hollow acetate tube or any type of transfer tube.

Alternatively or in addition, the processing unit may be arranged to detect a defect in the article. This may be achieved using an imaging algorithm which analyses variations in intensity of the image and compares them to predetermined norms. The defect may comprise one or more of: an unwanted gap between components; non-uniform tobacco crimp; migration of tobacco to other components; lack of concentricity of a tube; lack of concentricity of an inserted component; damaged or broken component; misplaced component; missing component; malformed component, or any other defect which can be determined from the image data.

The processing unit may be arranged to determine the size of a component and/or a defect through use of a calibrated or known internal standard, mask or graticule.

The drive mechanism may be arranged to move the rod-shaped article itself, or the sensor (and source), or both, in such a way as to achieve relative movement between the two. Generally, it will be easier to move the article, and so in a preferred embodiment the drive mechanism is arranged to move the article.

Preferably the apparatus comprises means for holding the rod-shaped article. For example, the drive mechanism may comprise for holding the rod-shaped article (or alternatively the article may be held stationary and the area image sensor may be moved). The means for holding the article may comprise, for example, a chuck, such as a vacuum chuck, or any other appropriate holding means such as a clamp or a push-fit holder. The drive mechanism may be arranged to move the holding means and thus the rod-shaped article along the axis of the rod-shaped article.

Preferably the holding means is arranged to hold a single smoking article. This may facilitate high speed processing and/or help to avoid complexity and cost.

Preferably the drive mechanism arranged such that the rod-shaped smoking article is not rotated relative to the area image sensor. Thus the drive mechanism may be arranged to produce linear axial movement, but not rotational movement, between the article and the area image sensor. This may also facilitate high speed processing and/or help to avoid complexity and cost.

The apparatus may further comprise a control unit for controlling operation of the drive mechanism. For example, the control unit may control the drive mechanism to move the article and/or area image sensor such that the sensor is able to produce image data corresponding to a plurality of different axial positions of the article.

The control unit may be arranged to control the drive mechanism to move the article and/or sensor such that an area of interest of the article is in a field of view of the sensor. This can allow a particular area of interest of the article (such as an area containing a particular component or at the interface between two components) to be imaged. If desired, the image may be taken while the article is stationary relative to the sensor, a relatively long exposure time may be used, and/or a plurality of images may be taken and combined, in order to obtain relatively high-quality image data.

The apparatus may further comprise a position encoder for recording a position of the article and/or means for holding the article (or where appropriate the sensor). This can help to ensure that the control unit knows the current position of the article (relative to the sensor), which can in turn help to ensure that the article is moved to the correct position. Furthermore, the positions of the article when the image data are produced may be recorded, which may facilitate combination of image data into a composite image.

As discussed above, by moving the article axially in front of the area image sensor, a plurality of images can be assembled into a larger composite image. However, this may have some disadvantages in that image construction may be slow unless image quality is compromised. In one embodiment, this disadvantage is overcome by fast scanning across some of the article, and slow scanning across areas of interest which require a higher resolution image.

Thus, the control unit may be arranged to control the drive mechanism to move the article and/or sensor such that relative movement between the two is faster in some axial positions of the article than in others. For example, in some axial positions the sample may be kept stationary for a relatively long time or may move at a relatively low speed while image data is being produced, while in other axial positions the sample may be kept stationary for a relatively short time or may move at a relatively high speed while image data is being produced. Thus, the time for which the article is stationary and/or the speed of movement may vary between different axial positions. Such an arrangement may help to ensure that an image is obtained quickly, while ensuring that a sufficiently high resolution image is obtained for critical regions.

The processing unit may be arranged to produce a composite image comprising at least one region with higher quality image data and at least one region with lower quality image data. For example, the higher quality image data may be produced while the article is stationary or moving at a first speed relative to the sensor, and the lower quality image data may be produced while the article is stationary for a shorter period of time, or as the article is moving, or as the article is moving at a second speed higher than the first speed relative to the sensor.

Alternatively or in addition, the higher quality image data may be produced using a longer exposure time and/or by taking a plurality of images, and the lower quality image data may be produced with a lower exposure time and/or using a single or a lower number of images.

Corresponding methods may also be provided. Thus, according to another aspect of the invention there is provided a method of analysing a rod-shaped smoking article as defined in claim 15.

Features of one aspect of the invention may be provided with any other aspect. Apparatus features may be provided with method aspects and vice versa.

As used herein, terms such as "axially", "radially" and "circumferentially" are preferably defined with reference to the longitudinal axis of the rod-shaped article, unless the context implies otherwise.

Preferred features of the present invention will now be described, purely by way of example, with reference to the accompanying drawings, in which:
Figure 1 shows an example of a heat-not-burn (HNB) stick;
Figure 2 shows parts of a testing apparatus in an embodiment of the present invention;
Figure 3 shows parts of the apparatus of Figure 2 viewed from above;
Figure 4 shows parts of an x-ray source;
Figure 5 shows parts of a typical panel detector;
Figure 6 shows a composite image of an HNB stick;
Figure 7 shows composite images of an HNB stick which have been digitally processed to enhance contrast;
Figure 8 shows two orthogonal images of part of an HNB stick;
Figure 9 shows two orthogonal images of another part of an HNB stick.

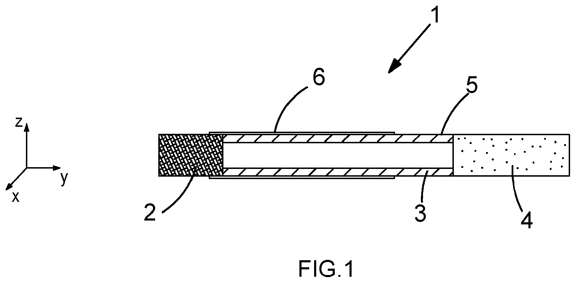

Figure 1 shows an example of a heat-not-burn (HNB) stick. Referring to Figure 1, the stick 1 is generally rod-shaped (cylindrical) with a major longitudinal axis running through its centre. In this example, the y-axis is defined as lying in the longitudinal (axial) direction while the x- and z-axes are defined as lying in the radial directions of the rod-shaped stick.

The HNB stick 1 comprises a tobacco plug 2, a transfer tube 3 and a filter 4, all of which are wrapped in paper 5. Since the stick does not burn, the wrapping paper 5 may be thicker than in conventional cigarettes. A foil overwrap 6 may also be provided over part of the stick. The tobacco plug 2 may be leaf or reconstituted tobacco and may be shredded or crimped into a fluted form. The transfer tube 3 may be made of paper, plastic or formed acetate. The filter 4 may be made of polylactic acid (PLA) crimped in place, or monoacetate. Other physical components (not shown) may be present such as carbon blocks, flavour capsules, metal foils and so on. The stick may further include tipping paper and flavours such as menthol. It will be appreciated that the exact construction of a HNB stick will vary depending on the manufacturer, so this description is given by way of example rather than limitation.

In use, the consumer inserts the HNB stick into a separate heating device which contains an electronically controlled heater. Typically, a heated blade is inserted into the tobacco plug. The heated blade heats the tobacco to produce a vapour.

The vapour is drawn through the transfer tube and the filter and inhaled by the consumer.

During manufacture of HNB sticks it is necessary to perform quality control to establish if the physical construction is as specified. Any defects may have a significant impact on consumer satisfaction and the delivery of nicotine and potentially harmful compounds to the consumer. Defects may be defined as, for example, missing elements, misplaced elements, gaps between elements, malformed elements, damaged elements etc. In all cases these may be hidden by the wrapping that surrounds the components of the HNB stick and so cannot be inspected using conventional callipers and inspection equipment unless the stick is disassembled.

Camera systems using visible light, such as those disclosed in WO 2004/083834, are known to be able to detect defects in conventional cigarettes. However, these systems are generally unsuitable for analysing HNB sticks which may have thick papers, outer metal foils, and little density differences between elements.

In embodiments of the present invention, radiation in the x-ray range of wavelengths, rather than visible or infrared, is used to perform quality control analysis. By changing the wavelength of radiation to the x-ray region it is possible for the radiation to penetrate the article under test. An image of the article can be generated using an area image sensor. This will provide image definition in two dimensions when the image is suitable processed digitally to enhance features of interest. This gives dimensional information in the x and y directions with a practical resolution of 0.05mm or better from a single image frame.

For many applications, the cost of a large flat panel image sensor may be prohibitive. However, by moving the sample under examination laterally in front of a smaller detector the images can be assembled into a larger image. This has some disadvantages in that image construction is slow unless image quality is compromised. In embodiments of the invention this is overcome by fast scanning across the majority of the sample and then slow scanning across areas of interest in order to generate a high-resolution image.

In principle, the information gained from the image can be enhanced if the sample is rotated whilst a series of images are taken and a quasi-three dimensional image is built up of the HNB stick structure. This will enhance some component features such as the density of tobacco along the length of the stick or the radial positioning of inserted elements such as flavour capsules. However, in practice this may involve excessive waiting times, and it has been found that similar benefits can be obtained by simultaneously taking two images at 90° to one another or at another suitable angle. This gives information on the radial placement of objects such as capsules and foils as well as information about the concentricity of holes in tubes such as present when hollow acetate tubes are present in the construction of the HNB sticks. Imaging in this way at oblique angles can also give additional information on the density of packing of a component of the HNB stick such as the tobacco crimp.

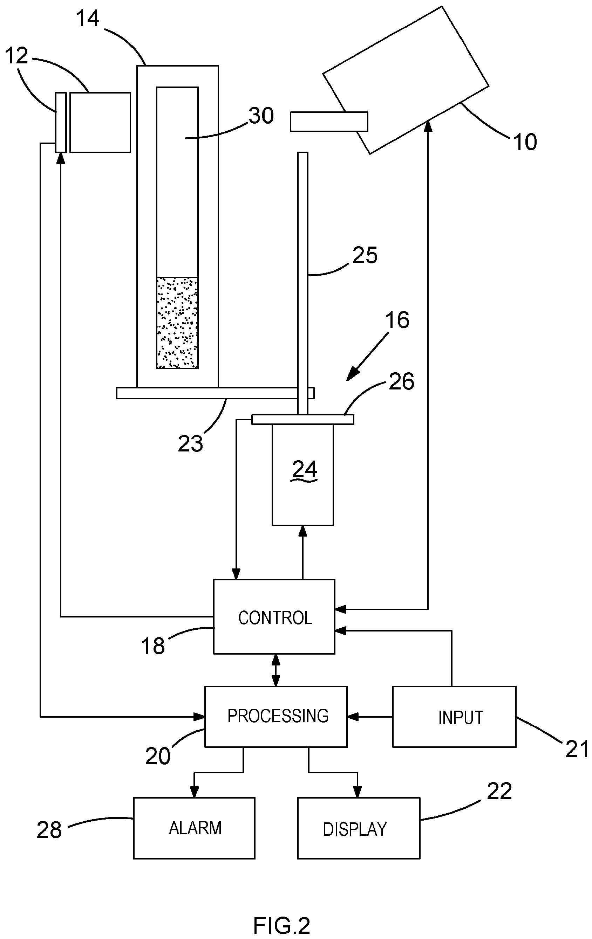

Figure 2 shows parts of a testing apparatus in accordance with an embodiment of the present invention. Referring to Figure 2, the apparatus comprises an x-ray source 10, x-ray panel detectors 12, vacuum chuck 14, drive mechanism 16, control unit 18, processing unit 20, input device 21, display 22 and alarm unit 28. The vacuum chuck 14 is used to hold a sample 30 using a vacuum. This holds the sample 30 in position with respect to the source 10 and the detector 12. The drive mechanism 16 is positioned out of the line of sight of the x-ray source 10 and the panel detectors 12.

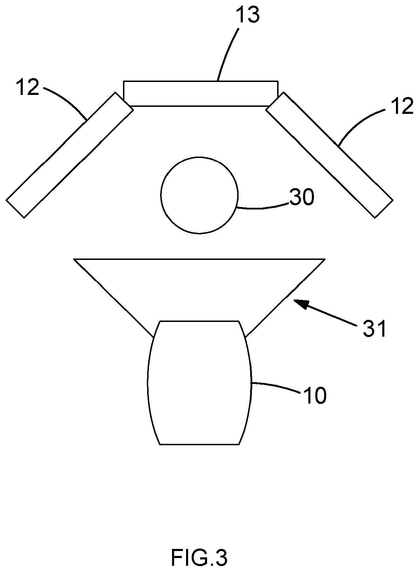

Figure 3 shows parts of the apparatus of Figure 2 when viewed from above. Referring to Figure 3, in this example two x-ray panel detectors 12 are disposed at different positions circumferentially about the sample 30, and are held in place with holder 13. The x-ray source 10 is arranged to irradiate the sample 30 with a beam of x-ray radiation 31 such that each detector 12 receives radiation that has passed through or been reflected by the sample 30. The panel detectors 12 are each in a plane which is parallel to the axis of the sample 30, but at an angle to each other, so that each detector views a different area of the sample circumferentially. In this example the two detectors are substantially orthogonal (at 90°) to each other, although other angles may be used instead. Additional panel detectors may also be provided if desired.

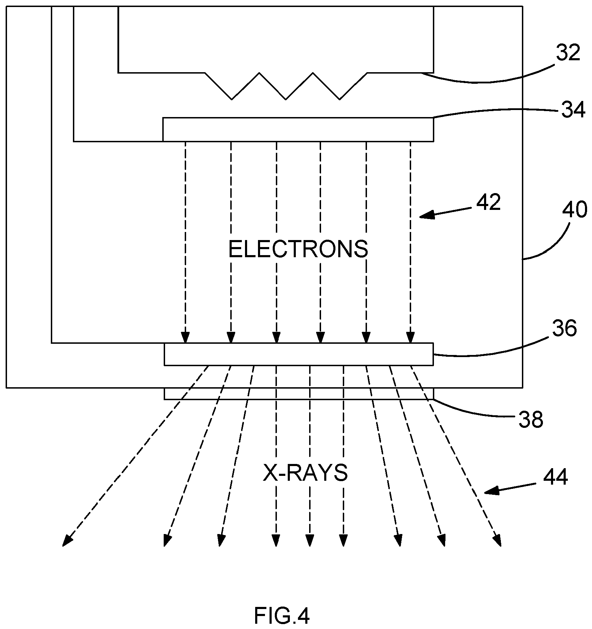

Figure 4 shows parts of the x-ray source 10 in one embodiment. Referring to Figure 4, the x-ray source comprises filament 32, cathode 34, target 36, Beryllium window 38 and enclosure wall 40. In operation, the filament 32 is used to heat the cathode 34 to produce electrons 42. The electrons 42 are accelerated to a high velocity by the target (anode) 36, which is at a high voltage. The high velocity electrons collide with the target, creating the x-rays 44. The x-rays are emitted to the exterior via the Beryllium window 38.

The panel detectors 12 are flat panel x-ray detectors (area image sensors) of a type known in the art. Flat panel x-ray detectors are a class of solid-state x-ray digital radiography devices similar in principle to the image sensors used in digital photography and video. The flat panel detectors detect x-ray radiation and convert it into electrical signals that represent an image. The detected radiation is radiation from the x-ray source 10 that has been subject to variable attenuation as it passes through or is reflected by the sample 30. The panel detectors may be of the CMOS (complementary metal-oxide-semiconductor) or CCD (charge-coupled device) type with appropriate scintillator devices, or any other appropriate type. The panel detectors typically include multiple functional blocks such as timing generators, vertical and horizontal shift registers, readout amplifier, A/D converters and low-voltage differential signalling (LVDS). This results in a digital signal with a high S/N ratio which makes the sensor panels easy to integrate into standard digital imaging tools. The panel detectors may incorporate a global shutter function that allows the synchronisation of the x-ray illumination timing to take a single shot of an image.

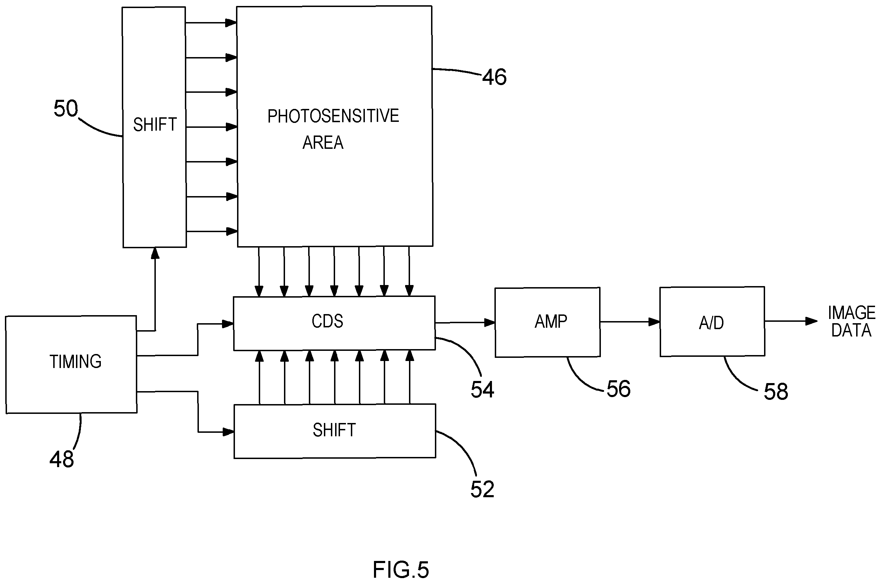

Figure 5 shows parts of a typical panel detector. Referring to Figure 5 the panel detector comprises photosensitive area 46, timing generator 48, vertical shift register 50, horizontal shift register 52, column CDS (correlated double sampling) circuit 54, image amplifier 56, and digital-to-analogue converter 58. The photosensitive area 46 in this example comprises 1000 x 1500 pixels and has an area of approximately 20mm x 30mm, although of course other values could be used instead. In operation, the timing generator 48 is used to generate timing signals for the shift registers 50, 52 in order to read out data from the photosensitive area 46. The data is amplified by image amplifier 56 and converted into digital by analogue-to-digital converter 58 to produce the image data. Panel detectors such as those shown in Figure 5 are known in the art and are typically used for intra-oral x-ray imaging in dental applications.

The panel detectors 12 are smaller than the sample under test so that a high-quality image can be taken of a small region of interest of the sample with a single exposure in a relatively short period of time. The distances between the source 10 and the sample 30, and between the sample 30 and the detectors 12, are optimised to give sufficient magnification of the image for the desired spatial resolution when considered with the image detector pixel size. Excessive magnification is avoided as there is a compromise regarding the exposure time which must be minimised to allow an analysis cycle time commensurate with the use of the equipment for Quality Assurance of a high-speed process.

Referring back to Figure 2, the drive mechanism 16 comprises platform 23, drive motor 24, leadscrew 25 and positional encoder 26. The vacuum chuck 14 is attached to the platform 23, which is translated by means of the motor 24 and leadscrew 25. The leadscrew 25 is aligned with the axis of the sample 30, such that rotation of the motor 24 causes the sample to move axially with respect to the source 10 and the detectors 12. The control unit 18 is used to control the operation of the motor 24 in order to move the sample 30 into the appropriate position for imaging. The exact positional reference to the vacuum chuck is measured by the positional encoder 26 and sent to the control unit 18. The positional encoder 26 may be fitted either to the drive mechanism 16 or to the vacuum chuck 14 itself. The drive mechanism 16 under control of the control unit 18 can precisely translate the sample 30 by increments as measured by the encoder 26.

In operation, the sample 30 is first moved to a position in which an area of interest is in the field of view of the detectors 12. Images of the sample are then taken by the panel detectors 12 and transferred to the processing unit 20. The sample is then moved axially to another position. In this position another pair of images is taken and transferred to the processing unit 20. This process may be repeated for a number of different positions of the sample. Preferably, the sample is moved such that images are taken along its entire length, with each image abutting or overlapping with the next. If desired, certain parts of the sample may be imaged as the sample is moving and/or with a reduced exposure time compared to other parts. The processing unit 20 processes the various images to produce a composite image and/or to determine physical properties of components of the sample 30.

The control unit 18 and the processing unit 20 may both be implemented as software routines executing on a suitable processor, such as personal computer. The control unit 18 and the processing unit 20 are both connected to the input device 21. The input device may comprise, for example, a keyboard and/or mouse, and is used for inputting test parameters and controlling operation of the system. The processing unit 20 is connected to the display 22 for displaying the results of the analysis. The control unit may also be connected to the display in order to facilitate the input of parameters and control of the system.

The processing unit 20 includes a suitable imaging algorithm for producing a composite image based on the individual images of different areas of the sample. Once a composite image has been produced, further image processing algorithms may be applied. For example, different contrasts may be applied highlighting different features and defects in the sample under test.

The processing unit 20 is also arranged to analyse the individual images and/or the composite image to discern one or more features in the image. Typical imaging software utilises one or more known algorithms for detecting an edge of an object in a digital image. Such algorithms typically involve measuring contrast levels for defining a point at which an edge is defined as being present, and the length (in pixels) along the defined edge which is used to determine a contiguous and true edge, and involve statistical considerations to determine the probability that a detected edge is a true edge. Edges are detected by analysing horizontal and vertical region projections of the image. Bright spots corresponding to internal voids and the like are detected using basic segmentation techniques after the image has been "thresholded" using a bimodal histogram threshold detection algorithm. Examples of suitable imaging algorithms are disclosed in WO 2004/083834, the subject matter of which is incorporated herein by reference.

In the arrangement described above, the drive mechanism 16 can precisely translate the sample 30 by increments as measured by the encoder to move a region of interest to the field of view of the detectors 12. At this point, two high quality images can be taken at orthogonal angles. Alternatively, a series of high quality images (relatively long exposure time) can be taken and overlaid to produce an image of greater quality.

During translation to a second or third region of interest it is possible to take lower quality images as the sample is moved. The processing unit 20 may overlay these with the high-quality images to form a composite image of the sample under test with critical regions of high quality for analysis and less critical areas having lower image quality and so of less detailed information. An example of the use of this lower quality image might be to determine the overall distribution of carbon in a so called Dalmatian filter (a filter with carbon dispersed within a cellulose acetate tow) over 120mm length during filter production. The higher quality image might be used at the interface at two combined sections of rod where there might be a void of sub millimetre size caused by angled cutting of one of the elements, while the lower quality images might be used elsewhere.

The proposed techniques are a significant improvement over existing camera techniques in that the information needed can be obtained quickly, for example in 5 to 10 seconds as opposed to 30 to 60 seconds; they can provide detailed spatial information in the x and y directions; they are impervious to paper thickness of blocking elements such as foils; they can determine changes in density of materials (similar to microwave imaging); they can find included objects (for example foils or capsules), determine their form, determine their position, determine if they are damaged; and with suitable algorithms define segment lengths and gaps in segment elements.

The images can be suitably processed digitally to enhance contrast using known techniques. One or more of the following may be determined from a single image or pair of images:
- End cut angle of rod
- Length of components within HNB stick
- Diameter of components with HNB stick
- Gaps between components in HNB stick
- Presence of all elements in HNB stick
- Overwrap of tipping and envelope papers
- Density of tobacco fill along tobacco column
- Dense end offset of tobacco column (a parameter used in manufacturing tobacco columns to prevent hot coal fall out)
- Uniformity of reconstituted tobacco crimp
- Contamination from one component to another e.g. tobacco to hollow acetate tube (HAT)
- Uniformity of carbon distribution in "Dalmatian" filters
- Longitudinal and radial positioning of inserted elements in filters and tobacco columns e.g. foils and capsules
- Concentricity of inner and outer surfaces of HAT
- Wall thickness of HAT and paper tubes
- Integrity of capsules (burst/not burst)
- Count of inserts

Currently available techniques such as microwave scanning or optical imaging require multiple measurement techniques to be used to glean defect information or the defects may go undetected due to the difficulty of determining the presence or nature of any potential defect.

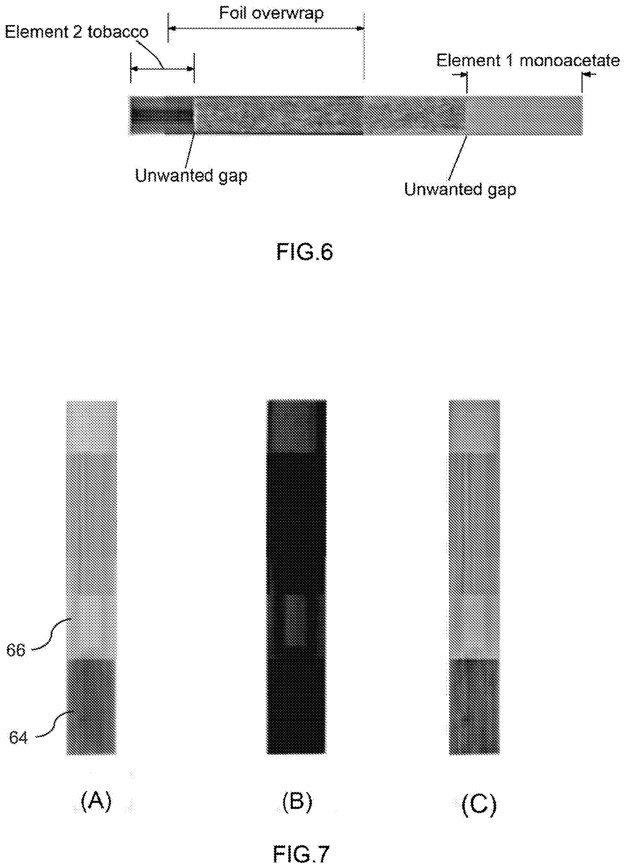

Figure 6 shows an example composite image of an HNB stick. The composite image is obtained by "stitching" together images taken with the sample 30 at different positions with respect to the panel detectors 12. Referring to Figure 6, it can be seen that different components of the stick, such as the tobacco plug, transfer tube, filter, wrapping paper and foil overwrap can be identified visually. Imaging algorithms in the processing unit 20 can also be used to identify the various components automatically. This is achieved by analysing variations in the intensity of the image, and comparing the variations in intensity to stored models. The edges of each component can be identified by the appropriate edge detection algorithms. Once the components and their edges have been identified, their dimensions can be measured by measuring the distances between the edges.

In Figure 6, the lighter section between the tobacco plug and transfer tube indicates a gap between those components which is undesirable. The processing unit can identify any such gaps by detecting a lighter area between two components. The exact size of the gap can be determined through calibration against a precise size standard that converts pixels on the detector to distance in both x and y directions. This size standard can form part of the image if a calibrated graticule is included as a mask over the detector or as part of the sample holder.

Figure 7 shows examples of composite images of an HNB stick which have been digitally processed to enhance contrast. In Figure 7(A) a wide tone range filter has been applied to the image. In Figure 7(B) a dark tone range filter has been applied. In Figure 7(C) a wide tone range and a dynamic compression filter has been applied. Each of the filters of Figures 7(A) to 7(C) may enhance a particular property or feature of the HNB stick. In the examples of Figure 7, a tobacco plug 64 and a hollow acetate tube (HAT) 66 can been seen, with different properties of these components being enhanced by the different filters.

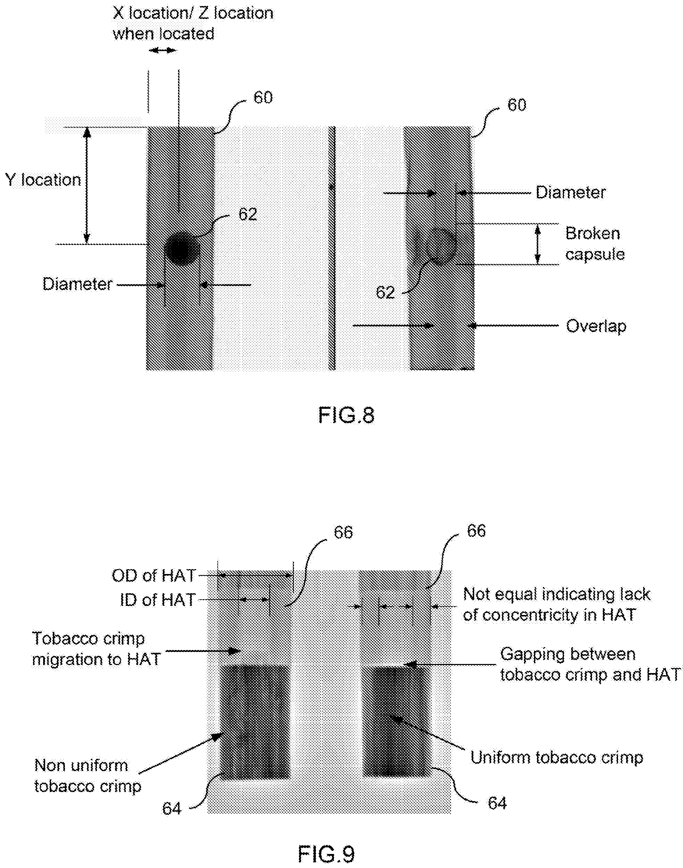

Figure 8 shows example images of an HNB stick with an inserted object taken with the panel detectors 12. In Figure 8, the images show part of an HNB stick 60 with an inserted object 62. The inserted object in this example is a gelatine capsule filled with flavoured water. As indicated in Figure 8, the imaging algorithms in the processing unit 20 can be used to measure various parameters such as the distance of the object from the end of the stick (y-location), the concentricity of the object (x- and z-locations), and the diameter of the object.

For example, in order to determine the y-location of the inserted object, the imaging algorithms first identify the end of the stick 60 and the centre of the object 62 by analysing variations in the intensity of the image. Once these points have been identified, the location of the object in the y-direction can be obtained by measuring the distance between the two. From Figure 8 it can be seen that the inserted object can be located in the y-direction from a single image, although more accurate results may be obtained by using two or more images. Similar processing techniques can be used to measure the diameter of the object.

The concentricity of the object can be determined from the pair of images which are taken orthogonally to each other. Additionally, through measurement of the diameter of the capsule in two orthogonal directions it can be determined if the capsule is burst or damaged during processing. In the example shown in Figure 8, the inserted capsule 62 has broken as can be seen from the right-hand side image.

Figure 9 shows another example of two orthogonal images taken with the panel detectors 12. In Figure 9, the images show a tobacco plug 64 and a hollow acetate tube (HAT) 66. As indicated in Figure 9, the imaging algorithms in the processing unit 20 can be used to measure various parameters such as the outside diameter (OD) of the HAT and the inside diameter (ID) of the HAT. This can be achieved by identifying the edges of the HAT, and then measuring the appropriate distances between them, in a similar way to that described above. By using orthogonal images it is possible to determine the concentricity (uniformity of section) of the HAT.

Additionally, the density uniformity of the tobacco crimp can be determined by analysing the change in grey density in the orthogonal images. Similar techniques can be used to identify "bleed" from tobacco into other elements.

Figure 9 also shows a lighter area between the tobacco plug 64 and the HAT 66 in the right-hand image. As in the example described above, this can be identified by the imaging algorithms by identifying a bright spot between the two components.

It will be appreciated that any other appropriate physical property of the HNB stick or a component thereof which is derivable from the image may be determined as well as or instead of those discussed above.

In any of the above embodiments, the imaging algorithms may be arranged to detected any defects in the sample, such as an unwanted gap, broken capsule, non-uniform tobacco crimp, migration of tobacco to HAT, lack of concentricity in the HAT, misplaced components, missing components, components not conforming to expected sizes, or any other unexpected or undesired physical property of the sample being determined. If any defects are detected, then this may be indicated to the user via the display 22, for example by highlighting the affected area or displaying a warning message. Alternatively or in addition an alarm signal may be output to alarm unit 28 which may output a visual and/or audible alarm, and/or be used to halt production of the HNB sticks.

It will be appreciated that embodiments of the present invention have been described above by way of example only, and modifications in detail will be apparent to the skilled person within the scope of the appended claims. For example, while embodiments of the invention have been described with reference to a HNB stick, the principles described herein may also be applied to the analysis of conventional cigarettes or any other rod-shaped article.

## Claims

1. Apparatus for analysing a rod-shaped smoking article, the apparatus comprising:
a source (10) of x-ray radiation arranged to irradiate an area of the rod-shaped smoking article (30);
an area image sensor (12) arranged to detect x-ray radiation from an area of the rod-shaped smoking article (30) and to produce two-dimensional image data therefrom;
a drive mechanism (16) arranged to move the rod-shaped smoking article (30) or the sensor (12) in an axial direction of the rod-shaped smoking article (30); and
a processing unit (20) arranged to process two-dimensional image data produced by the area image sensor (12) at a plurality of different axial positions of the rod-shaped smoking article (30) and to produce a composite two-dimensional image from two-dimensional image data produced by the area image sensor (12) at the plurality of different axial positions,
**characterised in that**:
the apparatus comprises two or more area image sensors (12) disposed circumferentially about the rod-shaped smoking article (30); and
the processing unit (20) is arranged to process two-dimensional image data produced by each of the area image sensors (12) and to determine positional characteristics of the rod-shaped smoking article (30) or components of the rod-shaped smoking article in three orthogonal directions without rotation of the rod-shaped smoking article.

2. Apparatus according to claim 1 wherein the rod-shaped smoking article (30) is a heat-not-burn stick comprising at least one hidden feature.

3. Apparatus according to claim 1 or 2, wherein each area image sensor (12) is arranged to image an area which is smaller than a length of the rod-shaped smoking article (30).

4. Apparatus according to any of the preceding claims, wherein each area image sensor (12) comprises a flat panel x-ray detector.

5. Apparatus according to any of the preceding claims, wherein the two or more area image sensors (12) are arranged to image the rod-shaped smoking article (30) simultaneously.

6. Apparatus according to any of the preceding claims, wherein the two or more area image sensors (12) are irradiated by a single x-ray source (10).

7. Apparatus according to any of the preceding claims, wherein the processing unit (20) is arranged to carry out one or more of the following:
output a two-dimensional image to be displayed and/or to output processed dimensional or quality information;
apply a filter to an image to be displayed and/or processed dimensional or quality information;
perform an imaging algorithm which analyses variations in intensity and/or colour in the two-dimensional image data;
identify components of the rod-shaped smoking article (30) in a two-dimensional image;
determine one or more physical properties of the rod-shaped smoking article (30) or a component thereof;
detect a defect in the rod-shaped smoking article (30); and
determine the size of a component and/or a defect through use of a calibrated or known internal standard, mask or graticule.

8. Apparatus according to any of the preceding claims, further comprising means (14) for holding the rod-shaped smoking article (30), wherein the holding means is arranged to hold a single rod-shaped smoking article (30).

9. Apparatus according to any of the preceding claims, wherein the drive mechanism (16) arranged such that the rod-shaped smoking article is not rotated relative to the area image sensor.

10. Apparatus according to any of the preceding claims, further comprising a control unit (18) for controlling operation of the drive mechanism (16), wherein the control unit is arranged to control the drive mechanism to move the rod-shaped smoking article (30), and/or area image sensor (12) such that an area of interest of the article is in a field of view of the sensor.

11. Apparatus according to claim 10, wherein the control unit (18) is arranged to control the drive mechanism (16) to move the rod-shaped smoking article (30) and/or area image sensor (12) such that relative movement between the two is faster in some axial positions of the article than in others.

12. Apparatus according to any of the preceding claims, wherein the processing unit (20) is arranged to produce a composite image comprising at least one region with higher quality image data and at least one region with lower quality image data.

13. Apparatus according to claim 12 wherein the higher quality image data are produced while the rod-shaped smoking article (30) is stationary or moving at a first speed relative to the area image sensor (12), and the lower quality image data are produced while the article is stationary for a shorter period of time, or while the article is moving, or while the article is moving at a second speed higher than the first speed, relative to the sensor.

14. Apparatus according to claim 12 or 13 wherein the higher quality image data are produced using a longer exposure time and/or by taking a plurality of images, and the lower quality image data are produced with a lower exposure time and/or using a single or a lower number of images.

15. A method of analysing a rod-shaped smoking article (30), the method comprising:
irradiating an area of the rod-shaped smoking article (30) with x-ray radiation;
detecting x-ray radiation from an area of the rod-shaped smoking article (30) and producing two-dimensional image data therefrom using an area image sensor (12);
moving the rod-shaped smoking article (30) or the area image sensor (12) in an axial direction of the rod-shaped smoking article;
detecting x-ray radiation from another area of the rod-shaped smoking article (30) and producing two-dimensional image data therefrom; and
processing two-dimensional image data from a plurality of different axial positions of the rod-shaped smoking article (30) and producing a composite two-dimensional image from two-dimensional image data produced by the area image sensor (12) at the plurality of different axial positions,
**characterised in that**:
the x-ray radiation is detected using two or more area image sensors (12) disposed circumferentially about the rod-shaped smoking article (30); and
two-dimensional image data produced by each of the area image sensors (12) are processed to determine positional characteristics of the rod-shaped smoking article (30) or components of the rod-shaped smoking article in three orthogonal directions without rotation of the rod-shaped smoking article.

## Patentansprüche

1. Vorrichtung zum Analysieren eines stabförmigen Rauchartikels, wobei die Vorrichtung Folgendes umfasst:
eine Röntgenstrahlungsquelle (10), die zum Bestrahlen eines Bereichs des stabförmigen Rauchartikels (30) ausgelegt ist;
einen Flächenbildsensor (12), der zum Erfassen von Röntgenstrahlung von einem Bereich des stabförmigen Rauchartikels (30) und zum Erzeugen von zweidimensionalen Bilddaten davon ausgelegt ist;
einen Antriebsmechanismus (16), der zum Bewegen des stabförmigen Rauchartikels (30) oder des Sensors (12) in einer axialen Richtung des stabförmigen Rauchartikels (30) ausgelegt ist; und
eine Verarbeitungseinheit (20), die zum Verarbeiten zweidimensionaler Bilddaten, die von dem Flächenbildsensor (12) an mehreren unterschiedlichen axialen Positionen des stabförmigen Rauchartikels (30) erzeugt werden, und zum Erzeugen eines zusammengesetzten zweidimensionalen Bildes aus zweidimensionalen Bilddaten ausgelegt ist, die von dem Flächenbildsensor (12) an den mehreren unterschiedlichen axialen Positionen erzeugt werden,
**dadurch gekennzeichnet, dass**:
die Vorrichtung zwei oder mehr Flächenbildsensoren (12) umfasst, die in Umfangsrichtung um den stabförmigen Rauchartikel (30) herum angeordnet sind; und
die Verarbeitungseinheit (20) zum Verarbeiten zweidimensionaler Bilddaten, die von jedem der Flächenbildsensoren (12) erzeugt werden, und zum Bestimmen von Positionskenndaten des stabförmigen Rauchartikels (30) oder Komponenten des stabförmigen Rauchartikels in drei orthogonalen Richtungen ohne Drehung des stabförmigen Rauchartikels ausgelegt ist.

2. Vorrichtung nach Anspruch 1, wobei der stabförmige Rauchartikel (30) ein heizbarer, aber nicht brennbarer Stab ist, der mindestens ein verborgenes Merkmal umfasst.

3. Vorrichtung nach Anspruch 1 oder 2, wobei jeder Flächenbildsensor (12) zum Abbilden eines Bereichs ausgelegt ist, der kleiner als eine Länge des stabförmigen Rauchartikels (30) ist.

4. Vorrichtung nach einem der vorherigen Ansprüche, wobei jeder Flächenbildsensor (12) einen Flachbild-Röntgendetektor umfasst.

5. Vorrichtung nach einem der vorherigen Ansprüche, wobei die zwei oder mehr Flächenbildsensoren (12) zum gleichzeitigen Abbilden des stabförmigen Rauchartikels (30) ausgelegt sind.

6. Vorrichtung nach einem der vorherigen Ansprüche, wobei die zwei oder mehr Flächenbildsensoren (12) von einer einzigen Röntgenquelle (10) bestrahlt werden.

7. Vorrichtung nach einem der vorherigen Ansprüche, wobei die Verarbeitungseinheit (20) zum Ausführen von einem oder mehreren der folgenden Schritte ausgelegt ist:
Ausgeben eines anzuzeigenden zweidimensionalen Bildes und/oder Ausgeben von verarbeiteten Maß- oder Qualitätsinformationen;
Anwenden eines Filters auf ein anzuzeigendes Bild und/oder auf verarbeitete Maß- oder Qualitätsinformationen;
Durchführen eines Bildgebungsalgorithmus, der Intensitäts- und/oder Farbvariationen in den zweidimensionalen Bilddaten analysiert;
Identifizieren von Komponenten des stabförmigen Rauchartikels (30) in einem zweidimensionalen Bild;
Bestimmen einer oder mehrerer physikalischer Eigenschaften des stabförmigen Rauchartikels (30) oder einer Komponente davon;
Erfassen eines Defekts in dem stabförmigen Rauchartikel (30); und
Bestimmen der Größe einer Komponente und/oder eines Defekts anhand eines/r kalibrierten oder bekannten internen Standards, Maske oder Strichgitters.

8. Vorrichtung nach einem der vorherigen Ansprüche, die ferner Mittel (14) zum Halten des stabförmigen Rauchartikels (30) umfasst, wobei das Haltemittel zum Halten eines einzigen stabförmigen Rauchartikels (30) ausgelegt ist.

9. Vorrichtung nach einem der vorherigen Ansprüche, wobei der Antriebsmechanismus (16) so ausgelegt ist, dass der stabförmige Rauchartikel nicht relativ zum Flächenbildsensor gedreht wird.

10. Vorrichtung nach einem der vorherigen Ansprüche, die ferner eine Steuereinheit (18) zum Steuern des Betriebs des Antriebsmechanismus (16) umfasst, wobei die Steuereinheit zum Steuern des Antriebsmechanismus ausgelegt ist, um den stabförmigen Rauchartikel (30) und/oder den Flächenbildsensor (12) so zu bewegen, dass ein Bereich von Interesse des Artikels in einem Sichtfeld des Sensors liegt.

11. Vorrichtung nach Anspruch 10, wobei die Steuereinheit (18) zum Steuern des Antriebsmechanismus (16) ausgelegt ist, um den stabförmigen Rauchartikel (30) und/oder den Flächenbildsensor (12) so zu bewegen, dass eine relative Bewegung zwischen den beiden in einigen axialen Positionen des Artikels schneller ist als in anderen.

12. Vorrichtung nach einem der vorherigen Ansprüche, wobei die Verarbeitungseinheit (20) zum Erzeugen eines zusammengesetzten Bildes ausgelegt ist, das mindestens eine Region mit Bilddaten höherer Qualität und mindestens eine Region mit Bilddaten niedrigerer Qualität umfasst.

13. Vorrichtung nach Anspruch 12, wobei die Bilddaten höherer Qualität erzeugt werden, während der stabförmige Rauchartikel (30) stationär ist oder sich mit einer ersten Geschwindigkeit relativ zum Flächenbildsensor (12) bewegt, und die Bilddaten niedrigerer Qualität erzeugt werden, während der Artikel für eine kürzere Zeitspanne stationär ist oder während sich der Artikel bewegt oder während sich der Artikel mit einer zweiten Geschwindigkeit, die höher als die erste Geschwindigkeit ist, relativ zum Sensor bewegt.

14. Vorrichtung nach Anspruch 12 oder 13, wobei die Bilddaten höherer Qualität mit einer längeren Belichtungszeit und/oder durch Aufnehmen mehrerer Bilder erzeugt werden und die Bilddaten niedrigerer Qualität mit einer kürzeren Belichtungszeit und/oder mit einem einzigen oder einer geringeren Anzahl von Bildern erzeugt werden.

15. Verfahren zum Analysieren eines stabförmigen Rauchartikels (30), wobei das Verfahren Folgendes beinhaltet:
Bestrahlen eines Bereichs des stabförmigen Rauchartikels (30) mit Röntgenstrahlung;
Erfassen von Röntgenstrahlung von einem Bereich des stabförmigen Rauchartikels (30) und Erzeugen zweidimensionaler Bilddaten davon mit Hilfe eines Flächenbildsensors (12);
Bewegen des stabförmigen Rauchartikels (30) oder des Flächenbildsensors (12) in einer axialen Richtung des stabförmigen Rauchartikels;
Erfassen von Röntgenstrahlung von einem anderen Bereich des stabförmigen Rauchartikels (30) und Erzeugen zweidimensionaler Bilddaten davon; und
Verarbeiten von zweidimensionalen Bilddaten aus mehreren unterschiedlichen axialen Positionen des stabförmigen Rauchartikels (30) und Erzeugen eines zusammengesetzten zweidimensionalen Bildes aus zweidimensionalen Bilddaten, die von dem Flächenbildsensor (12) an den mehreren unterschiedlichen axialen Positionen erzeugt werden,
**dadurch gekennzeichnet, dass**:
die Röntgenstrahlung mit zwei oder mehr Flächenbildsensoren (12) erfasst wird, die in Umfangsrichtung um den stabförmigen Rauchartikel (30) herum angeordnet sind; und
von jedem der Flächenbildsensoren (12) erzeugte zweidimensionale Bilddaten verarbeitet werden, um Positionskenndaten des stabförmigen Rauchartikels (30) oder Komponenten des stabförmigen Rauchartikels in drei orthogonalen Richtungen ohne Drehung des stabförmigen Rauchartikels zu bestimmen.

## Revendications

1. Un appareil d'analyse d'un article pour fumeur en forme de tige, l'appareil comprenant :
une source (10) de rayonnement à rayons x agencée de façon à irradier une zone de l'article pour fumeur en forme de tige (30),
un capteur d'image de zone (12) agencé de façon à détecter un rayonnement à rayons x provenant d'une zone de l'article pour fumeur en forme de tige (30) et à produire des données d'image bidimensionnelles à partir de celui-ci,
un mécanisme d'entraînement (16) agencé de façon à déplacer l'article pour fumeur en forme de tige (30) ou le capteur (12) dans une direction axiale de l'article pour fumeur en forme de tige (30), et
une unité de traitement (20) agencée de façon à traiter des données d'image bidimensionnelles produites par le capteur d'image de zone (12) à une pluralité de positions axiales différentes de l'article pour fumeur en forme de tige (30) et à produire une image bidimensionnelle composite à partir des données d'image bidimensionnelles produites par le capteur d'image de zone (12) à la pluralité de positions axiales différentes,
**caractérisé en ce que** :
l'appareil comprend deux ou plus capteurs d'image de zone (12) disposés circonférentiellement autour de l'article pour fumeur en forme de tige (30), et
l'unité de traitement (20) est agencée de façon à traiter des données d'image bidimensionnelles produites par chacun des capteurs d'image de zone (12) et à déterminer des caractéristiques de position de l'article pour fumeur en forme de tige (30) ou des composantes de l'article pour fumeur en forme de tige dans trois directions orthogonales sans la rotation de l'article pour fumeur en forme de tige.

2. L'appareil selon la Revendication 1 où l'article pour fumeur en forme de tige (30) est un bâton à chauffage sans combustion comprenant au moins une caractéristique cachée.

3. L'appareil selon la Revendication 1 ou 2, où chaque capteur d'image de zone (12) est agencé de façon à imager une zone qui est plus petite qu'une longueur de l'article pour fumeur en forme de tige (30).

4. L'appareil selon l'une quelconque des Revendications précédentes, où chaque capteur d'image de zone (12) comprend un détecteur à rayons x à panneau plat.

5. L'appareil selon l'une quelconque des Revendications précédentes, où les deux ou plus capteurs d'image de zone (12) sont agencés de façon à imager l'article pour fumeur en forme de tige (30) simultanément.

6. L'appareil selon l'une quelconque des Revendications précédentes, où les deux ou plus capteurs d'image de zone (12) sont irradiés par une source de rayons x unique (10).

7. L'appareil selon l'une quelconque des Revendications précédentes, où l'unité de traitement (20) est agencée de façon à exécuter une ou plusieurs des opérations suivantes :
produire en sortie une image bidimensionnelle à afficher et/ou produire en sortie des informations de qualité ou dimensionnelles traitées,
appliquer un filtre à une image à afficher et/ou à des informations de qualité ou dimensionnelles traitées,
exécuter un algorithme d'imagerie qui analyse des variations d'intensité et/ou de couleur dans les données d'image bidimensionnelles,
identifier des composantes de l'article pour fumeur en forme de tige (30) dans une image bidimensionnelle,
déterminer une ou plusieurs propriétés physiques de l'article pour fumeur en forme de tige (30) ou une composante de celui-ci,
détecter un défaut dans l'article pour fumeur en forme de tige (30), et
déterminer la taille d'une composante et/ou d'un défaut par l'utilisation d'un masque ou d'un réticule standard interne connu ou calibré.

8. L'appareil selon l'une quelconque des Revendications précédentes, comprenant en outre un moyen (14) de préhension de l'article pour fumeur en forme de tige (30), où le moyen de préhension est agencé de façon à tenir un seul article pour fumeur en forme de tige (30).

9. L'appareil selon l'une quelconque des Revendications précédentes, où le mécanisme d'entraînement (16) est agencé de sorte que l'article pour fumeur en forme de tige ne soit pas pivoté par rapport au capteur d'image de zone.

10. L'appareil selon l'une quelconque des Revendications précédentes, comprenant en outre une unité de commande (18) destinée à la commande de l'actionnement du mécanisme d'entraînement (16), où l'unité de commande est agencée de façon à commander le mécanisme d'entraînement de façon à déplacer l'article pour fumeur en forme de tige (30), et/ou le capteur d'image de zone (12) de sorte qu'une zone d'intérêt de l'article se trouve dans un champ de vision du capteur.

11. L'appareil selon la Revendication 10, où l'unité de commande (18) est agencée de façon à commander le mécanisme d'entraînement (16) de façon à déplacer l'article pour fumeur en forme de tige (30) et/ou le capteur d'image de zone (12) de sorte qu'un déplacement relatif entre les deux soit plus rapide dans certaines positions axiales de l'article que dans d'autres.

12. L'appareil selon l'une quelconque des Revendications précédentes, où l'unité de traitement (20) est agencée de façon à produire une image composite comprenant au moins une zone avec des données d'image de qualité supérieure et au moins une zone avec données d'image de qualité inférieure.

13. L'appareil selon la Revendication 12 où les données d'image de qualité supérieure sont produites pendant que l'article pour fumeur en forme de tige (30) est stationnaire ou se déplace à une première vitesse par rapport au capteur d'image de zone (12), et les données d'image de qualité inférieure sont produites pendant que l'article est stationnaire pendant une période temporelle plus courte, ou pendant que l'article se déplace, ou pendant que l'article se déplace à une deuxième vitesse plus élevée que la première vitesse, par rapport au capteur.

14. L'appareil selon la Revendication 12 ou 13 où les données d'image de qualité supérieure sont produites au moyen d'un temps d'exposition plus long et/ou par la prise d'une pluralité d'images, et les données d'image de qualité inférieure sont produites avec un temps d'exposition plus court et/ou au moyen d'une image unique ou d'un nombre d'images plus faible.

15. Un procédé d'analyse d'un article pour fumeur en forme de tige (30), le procédé comprenant :
l'irradiation d'une zone de l'article pour fumeur en forme de tige (30) avec un rayonnement à rayons x,
la détection d'un rayonnement à rayons x provenant d'une zone de l'article pour fumeur en forme de tige (30) et la production de données d'image bidimensionnelles à partir de celui-ci au moyen d'un capteur d'image de zone (12),
le déplacement de l'article pour fumeur en forme de tige (30) ou du capteur d'image de zone (12) dans une direction axiale de l'article pour fumeur en forme de tige,
la détection d'un rayonnement à rayons x provenant d'une autre zone de l'article pour fumeur en forme de tige (30) et la production de données d'image bidimensionnelles à partir de celui-ci, et
le traitement de données d'image bidimensionnelles provenant d'une pluralité de positions axiales différentes de l'article pour fumeur en forme de tige (30) et la production d'une image bidimensionnelle composite à partir de données d'image bidimensionnelles produites par le capteur d'image de zone (12) à la pluralité de positions axiales différentes,
**caractérisé en ce que** :
le rayonnement à rayons x est détecté au moyen de deux ou plus capteurs d'image de zone (12) disposés circonférentiellement autour de l'article pour fumeur en forme de tige (30), et
les données d'image bidimensionnelles produites par chacun des capteurs d'image de zone (12) sont traitées de façon à déterminer des caractéristiques de position de l'article pour fumeur en forme de tige (30) ou des composantes de l'article pour fumeur en forme de tige dans trois directions orthogonales sans la rotation de l'article pour fumeur en forme de tige.
